# EUROPEAN PATENT SPECIFICATION

(11) **EP 2 785 591 B1**
(45) Date of publication and mention of the grant of the patent: **07.06.2017**
(21) Application number: 12794293.6
(22) Date of filing: 27.11.2012
(51) Int. Cl.: B64D 37/32, B64D 13/06, B01J 19/14, B01D 53/00

(54) **ON BOARD INERT GAS GENERATION SYSTEM**
BORDEIGENES INERTGASERZEUGUNGSSYSTEM
SYSTÈME DE GÉNÉRATION DE GAZ INERTE À BORD

(30) Priority: 29.11.2011 IN 3417DE2011; 03.02.2012 GB 201201893
(43) Date of publication of application: 08.10.2014
(73) Proprietor: Eaton Limited, Titchfield Fareham Hampshire PO14 9ED (GB)
(72) Inventor: MASSEY, Alan Ernest, Southampton Hampshire SO31 6NN (GB); DAS, Alok, Pune 411014 (IN); JOSHI, Mahesh Prabhakar, Pune 411033 (IN); MAHALTATKAR, Kartikeya Krishnoji, Pune 411014 (IN); KOLLIPARA, H K Pavan Kumar, Pune 411014 (IN)
(74) Representative: Eaton IP Group EMEA
(86) International application number: PCT/EP2012/073685
(87) International publication number: WO 2013/079466

(56) References cited:
- EP-A1- 1 433 704
- EP-A2- 2 163 476
- GB-A- 737 393
- US-A- 5 113 669
- US-A1- 2003 233 936
- US-A1- 2004 065 778
- US-A1- 2005 229 968
- US-A1- 2005 247 197
- US-A1- 2008 060 523

## Description

This invention relates to an on board inert gas generation system for generation of inert gas on board an aircraft to facilitate inerting of the fuel tanks and other areas on board the aircraft.

In this specification the widely accepted terminology is employed with the term 'inert gas generation' meaning the generation of an oxygen depleted or 'nitrogen-enriched atmosphere' (NEA). In recent years the move towards the use of composites in the construction of aircraft wings has meant that the temperatures within the fuel tanks is greater than that of wings of conventional material due to the lower thermal conduction of the composite. Thus there is an even greater need for effective inerting of the aircraft fuel tanks in composite wings due to the greater temperatures experienced. It is well known to use one or more filters or 'air separation modules' (ASMs) which allow separation of a supply of inlet air into a nitrogen-enriched air portion (NEA) and an oxygen-enriched air portion (OEA). In order to run air separation modules efficiently, they need to be supplied with inlet air at a relatively high pressure (typically 40psig (2.76 x 10⁵ Pag) or more). It is possible to operate at lower pressures but this would mean that more air separation modules would be required with the consequent increase in weight and complexity, which is undesirable. By way of illustration if the air supplied to an ASM is at 15 psig, then ten ASMs would be required each weighing approximately 27kg. But if the inlet air is at 56 psig only two ASMs are required to provide the required NEA capacity. In the past, the air separation modules have been supplied with high pressure bleed air from the main aircraft power plant. This has been bled off the compressor, cooled, filtered and then supplied to the ASM or ASMs. This system works well but there is an increasing demand on aircraft manufacturers to reduce the specific fuel consumption (SFC) of the aircraft. It is known that bleeding high pressure air from the compressor has an adverse effect on SFC and so there is now a trend to cease use of high pressure bleed air so that the engine performance can be optimised. This means that an alternative source of fluid for supply to the air separation module needs to be found and at an elevated pressure for the reasons given above.

US2006/0117956 describes an on board inert gas generation system which uses two compressors or stages arranged in series to provide compressed air to the air separation module. In order to provide high pressures to the air separation module, whilst coping with the severe strictures imposed by compressor rotor blade design limitations, US2006/0117956 provides a system in which two centrifugal compressors are run in series. The compressed air from the second stage is passed to an air separation module, but a vent is provided between the second stage compressor and the air separation module to enable the flow from the second compressor to be increased, which results in the second compressor having an increased output pressure whilst using the same compressor rotor blade design. Although this provides the centrifugal compressor with a wider operating range of output flows, it does mean that the operating efficiency is very poor at low flow rates because excess flow is .vented through an anti-surge valve to prevent the impeller being damaged. Since the aircraft operates at cruise during the major part of its operation, this means that for the majority of the time the centrifugal compressor arrangement is operating at well below its optimal operating efficiency.

Thus the inherent characteristics of a centrifugal compressor are ill-adapted for the operating regime and variations in the flow rates and pressures required during the cycle of ascent, cruise and descent of an aircraft and have resulted in unnecessarily complex solutions such as those set out above, which only partly tackle the issues. As noted, the ASM operates effectively at pressures above 40 psig (2.76 x 10⁵ Pag). Lower pressures require a larger ASM or several ASMs (and therefore increase weight) for a given duty, whilst higher pressures may exceed the maximum working pressure of the ASM. The flow requirement for an inerting system varies with flight phase. Descent requires the maximum NEA flow-rate as the inerting system is required to re-pressurise the fuel tanks to equalize the tank and ambient pressures. Cruise requires minimum flow-rate as the NEA flow-rate is only required to make up the increase in ullage volume created by fuel burn. The ratio between maximum descent flow and cruise flow is typically up to 6:1 depending on aircraft type, cruise altitude and descent rate. This does not fit well with typical centrifugal compressor characteristics which have a very narrow flow range bounded by the surge limit and the diffuser 'choking' limit. In a centrifugal compressor flow can be increased by increasing speed but the pressure generated increases as the square of the speed, and the power required increases by the cube of the speed. The additional pressure must be regulated to avoid damage to the ASM. This makes it very inefficient over the flow range required by an inerting system.

By contrast, we have found that the characteristics of a positive displacement type compressor are very well suited to provide the large variations in flow, because they provide a flow rate generally proportional to speed, at a pressure sufficient to supply the pressure required by the ASM and without the substantial pressure increases at higher flow rates, which can reduce ASM life. Therefore we have designed an on board inert gas generation system which is intended to obviate some of the problems encountered with centrifugal compressor based systems.

In an arrangement such as is described in US2006/0117956 a centrifugal compressor is driven at a strictly limited speed range and the compressor is run on maximum load condition. NEA flow to the fuel tanks is controlled by a NEA flow control valve and, at part load, excess flow from the compressor is dumped to atmosphere through a surge control valve. This is an inefficient use of the motor and arises because when using a centrifugal compressor, the motor speed is strictly limited due to the surge constraint.

EP1433704, which is considered the closest prior art, relates to a method and system for inerting aircraft fuel tanks by providing a nitrogen enriched air supply. One embodiment discloses an inerting system for reducing the oxygen content within an air stream including a second compressor driven by exhaust from a first compressor to increase air pressure to optimal working pressure of an air separation module.

Accordingly, we have designed a system where the flow delivered by the compressor can be modulated across a wide range without substantially compromising efficiency of the compressor or the ASM. An important advantage of this system is that it allows the on board inert gas generation system to be controlled by varying the compressor speed in accordance with the purity of the detected atmosphere in the space to be inerted, and/or in accordance with a required operating pressure in the ASM.

Accordingly, in one aspect, this invention provides an on board inert gas generation system for use in an aircraft having a source of low pressure air, said gas generation system including a rotary positive displacement compressor having an inlet for receiving a portion of said low pressure air, an outlet in flow communication with an air separation module which in use delivers a Nitrogen Enriched Air fraction and an Oxygen Enriched Air fraction, the Nitrogen Enriched Air fraction being supplied to a space to be inerted, a motor for driving said rotary positive displacement compressor, a sensor for monitoring the composition of at least one of the fractions delivered by said air separation module and/or the composition in said space to be inerted, and a controller responsive to said sensor which in use controls the motor speed in accordance with said monitored composition.

Preferably the positive displacement compressor is a rotary device providing a substantially constant and continuous flow in use.

Preferably said sensor monitors the composition of the NEA. This may be done by monitoring either the oxygen content or the nitrogen content, or both.

Preferably said system includes a flow control valve in the flow path downstream of the ASM, and the controller is operable to control the flow control valve to vary the flow through said passage in accordance with NEA requirements. Thus, where the NEA is supplied to a fuel tank, the desired flow may be determined on the basis of the atmosphere composition in the fuel tank, the ullage volume and the flight condition. The flight condition and Oxygen content in the fuel tank determines the NEA purity and NEA flow required during that phase.

The term 'low pressure air' used herein means air which is below the inlet pressure required by the air separation module, is generally at a pressure less than 40psig and typically in the range of from 20psig to 30psig,. In one scheme the low pressure air may be low pressure engine bleed air. In another scheme the low pressure air may be ram air.

In one arrangement, in order to provide at least some of the power to drive the compressor, the gas generation system may include a turbine for receiving and expanding a portion of cabin air. The turbine may be drivably connected to said positive displacement compressor to provide direct mechanical drive. Instead, or additionally, the turbine may be drivably connected to an electrical generator.

In a motor-driven configuration, an electric motor may be drivably connected to said positive displacement compressor, which conveniently receives electrical energy from said generator or an energy storage arrangement associated therewith. Furthermore, said electric motor may be connectable to receive electrical energy from an aircraft electrical supply. The motor may provide all the power required, or a portion thereof, with the balance being provided by shaft power, for example from a turbine as above.

A power controller may be conveniently provided for selectively receiving electrical energy from said generator (or an electrical storage arrangement associated therewith), and electrical energy from the aircraft electrical supply, and for controllably supplying electrical energy to said electric motor.

The inert gas generation system may include a heat exchanger in the flow path between said positive displacement compressor and said air separation module, the heat exchanger having heating and cooling passes for fluid, with the air from said positive displacement compressor being passed along said cooling pass thereby to reduce the temperature of air supplied to said air separation module. The heat exchanger may receive relatively cool ram air from a ram air duct. The system may include a duct for supplying cabin air to the heating pass of said heat exchanger and a duct for supplying said heated air from the heating pass of the heat exchanger to the input of said turbine. In this case a valve may be provided for selectively supplying relatively cool ram air or cabin air to said heat exchanger.

In yet another aspect, this invention provides a method for operating an on board inert gas generation system in an aircraft having a source of low pressure air (e.g. ram air or low pressure engine bleed air), which comprises the steps of:
supplying a portion of said low pressure air to a positive displacement compressor,
supplying compressed air from said positive displacement compressor to an air separation module which delivers a NEA fraction and an OEA fraction, the NEA fraction being supplied to a space to be inerted,
monitoring the composition of at least one of the fractions delivered by said ASM and/or the composition in said space to be inerted, and
controlling the motor speed in accordance with said monitored composition.

The invention also extends to an aircraft incorporating an on board inert gas generating system as set out above.

Whilst the invention has been described above, it extends to any inventive combination or sub-combination of any of the features disclosed herein alone or jointly with others.

By way of example only, certain specific embodiments of the invention will now be described, reference being made to the accompanying drawings, in which:
Figure 1 is a block diagram of a first embodiment of on board inert gas generation system in accordance with this invention;
Figure 2 is a block diagram of a second embodiment of on board inert gas generation system in accordance with this invention;
Figure 3 is a block diagram of a third embodiment of on board inert gas generation system in accordance with this invention; Figures 4 and 5 are block diagrams of a fourth embodiment of on board inert gas generation system in accordance with this invention;
Figure 6 is a block diagram of a control system for a fifth embodiment of an on board inert gas generation system in accordance with the invention;
Figure 7 is a block diagram of a fifth embodiment of an on board inert gas generation scheme embodying the control system of Figure 6, and
Figure 8 is a block diagram of a sixth embodiment of an on board inert gas generation scheme in accordance with the invention in which the OEA fraction from the ASM is delivered for use by another aircraft service.

The embodiments described below employ a variable speed mechanically and/or electrically driven positive displacement boost compressor to supply air at suitable pressure and flow to an air separation module to inert the fuel tanks of aircraft. An energy recovery turbine is combined with the compressor to reduce electrical power drain by using cabin air supply for both compressor and turbine.

The embodiments make use of passenger cabin air which is provided by the aircraft Environmental Control System (ECS) which requires power from the propulsion engines and increases engine specific fuel consumption. Having circulated through the cabin the air is then vented to atmosphere through overboard vent valves as a waste product. Using this air for fuel tank inerting purposes incurs no additional increase in Specific Fuel Consumption (SFC) as this has been paid for by the ECS. Cabin pressure is typically 11 or 12 psia at cruise altitude, which is too low for the air separation module (ASM) which separates the air into Nitrogen Enriched Air (NEA) and Oxygen Enriched Air (OEA) and which as noted typically operates at pressures in excess of 40psig. From the ASM the OEA is vented overboard as a waste product and the NEA is passed to the fuel tanks to provide an inert ullage atmosphere. The embodiments below use a turbine to generate power during the cruise phase by using 'free' cabin air to provide power to a variable speed positive displacement compressor.

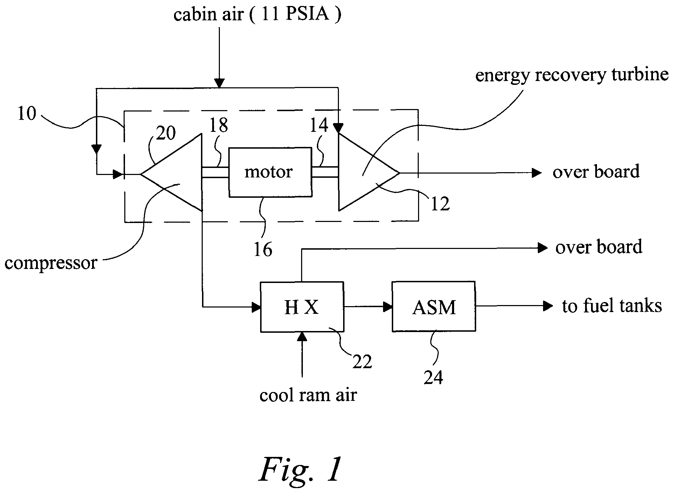

In the first embodiment, illustrated in Figure 1, cabin air (typically at 11Psia) (0.76X10⁵ Pa)) is supplied to a turbo compressor module 10 with a portion of the cabin air being supplied to an energy recovery turbine 12, with the outlet of the turbine 12 being vented overboard. The output shaft 14 of the turbine is connected either directly or via a gearbox or motor 16 to the input shaft 18 of a compressor 20. The compressed cabin air portion supplied from the compressor is passed to the cooling pass of a heat exchanger 22 and thence to an air separation module 24. The NEA from the air separator module 24 is then supplied to the aircraft fuel tanks for inerting. The OEA is vented overboard. The heat exchanger 22 receives relatively cold ram air which passes along the heating pass of the heat exchanger and then is vented overboard. The compressor 20 is a positive displacement compressor or pump designed to have a pressure ratio of between 2 and 4. Any suitable form of positive displacement compressor or pump may be used, similar to those used as superchargers for internal combustion engines and which may typically be based on a modified Roots-type positive displacement pump of a type which does not include internal pressure generation. The positive displacement compressor may be a single stage or multistage device. An example of a suitable device is a Twin Vortex System (TVS) Roots-type supercharger available from Eaton Corporation. In this embodiment, the use of a positive displacement compressor is capable of providing the high flow rates required for descent, without the substantial increase in output pressure that is inherent in a centrifugal compressor. Moreover, in some embodiments the power for the compressor may at least partially supplied by 'free' energy from discharging the cabin air which will be discharged anyway by the cabin environmental control system.

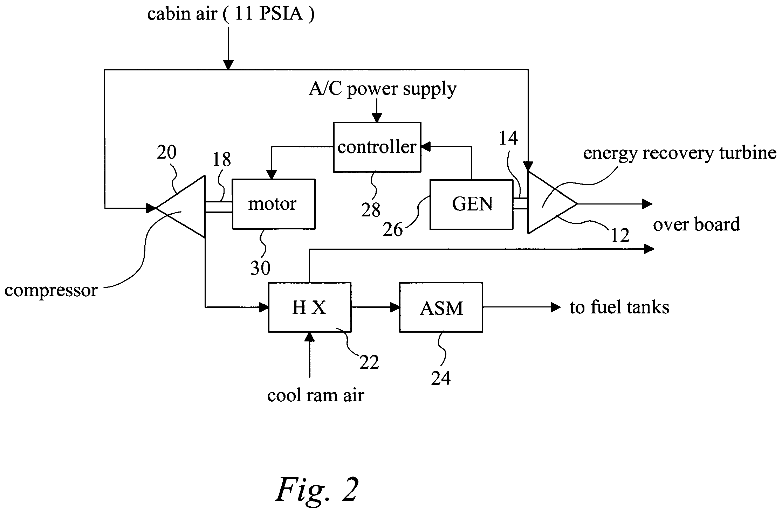

Referring to Figure 2, the second embodiment is closely similar to the first embodiment and similar references will be used. Here the output drive of the energy recovery turbine 12 is supplied to a generator 26 which supplies electrical power to a controller 28 which is also capable of receiving electrical power from the aircraft power supply. The controller 28 supplies electrical power to a motor 30 which drives the drive shaft 18 of the positive displacement compressor 20. The electrical power controller combines and conditions the power produced by the turbine generator 26 with that from the aircraft's supply and controls the speed of the compressor as required for the requirements of cruise and descent.

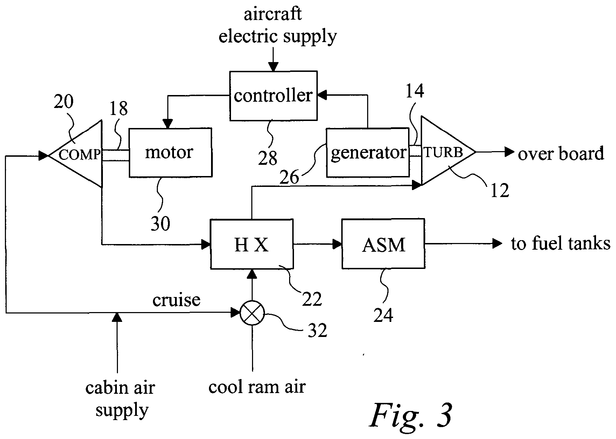

Referring now to Figure 3, the third embodiment is generally similar to the second embodiment in several respects and similar references will be used. As previously, cabin air is used to drive an energy recovery turbine 12 which drives the generator 26 which supplies electrical power to the controller 28. A further portion of the cabin air is supplied to the positive displacement compressor 20. In the third embodiment, however, the portion of cabin air to be supplied to the turbine is initially passed through the heat exchanger 22, instead of ram air. This increases the temperature and thus the enthalpy of the cabin air portion supplied to the turbine and improves power extraction for a given turbine exit temperature, whilst cooling the portion supplied to the air separator module 24. The increased inlet temperature of the cabin air supplied to the turbine can also mitigate against icing of the turbine. As the aircraft descends the pressure ratio between the cabin and the atmosphere reduces with reducing altitude. This results in reduced turbine power and, via the controller 28, the compressor 20 takes an increasing amount of power from the aircraft electrical supply. On the ground the cabin/ambient pressure difference is zero so all the power required by the compressor must be supplied by the aircraft electrical supply. A valve 32 is provided upstream of the heat exchanger so that during descent, and on the ground, the valve 32 may be operated to switch the cooling air for the heating pass from cabin air to ram air. Alternatively, a fan (not shown) may be incorporated in the system to boost the flow rate of the cabin air portion to the heat exchanger when the cabin differential pressure is insufficient to provide the required cooling flow.

An important benefit of the various embodiments described herein is that they reduce SFC at cruise altitude, where aircraft economics are most critical. Descent is a relatively short period where power consumption is less critical and, in any event, sufficient power may be available as large electrical loads (e.g. galley ovens) are not in demand in the descent phase, so the use of electrical power to drive the compressor does not impose constraints on aircraft electrical generator sizing.

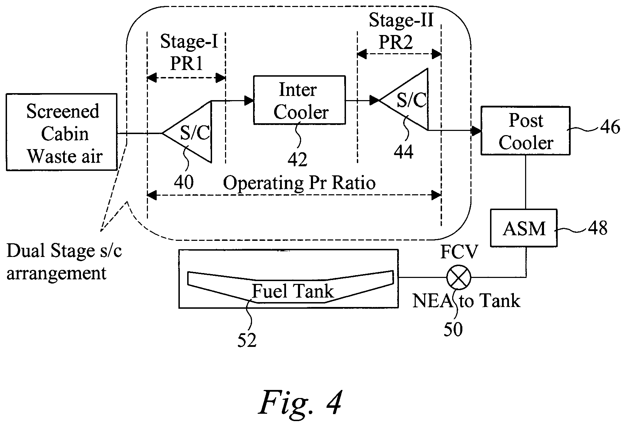

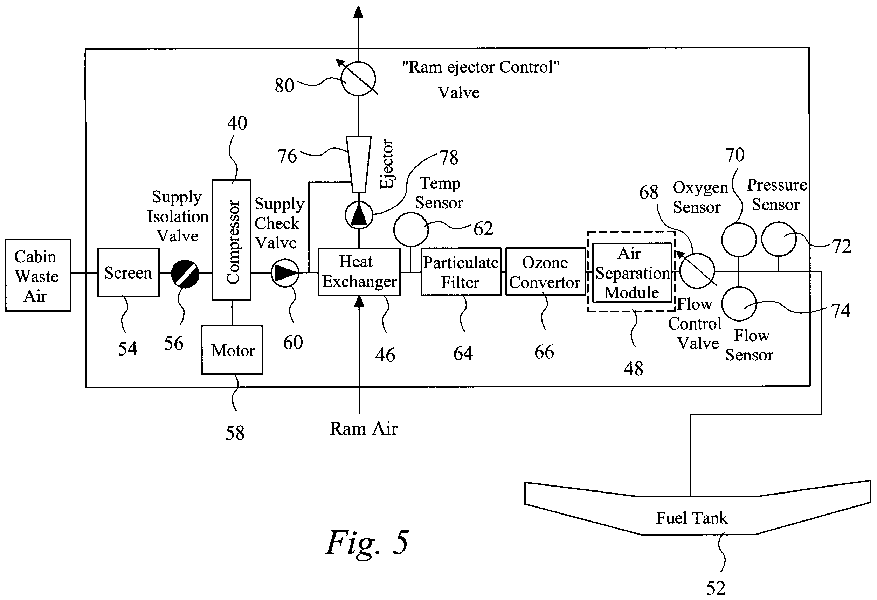

Referring now to Figure 4, there is shown in schematic form a further embodiment in accordance with this invention in which the cabin waste air, following screening, is passed to a multiple stage positive displacement compressor arrangement comprising a first stage positive displacement compressor 40 which receives a portion of the cabin air and compresses it before it passes via an intercooler 42 to a second stage positive displacement compressor 44. The typical pressure ratio across each positive displacement compressor is in the range of from 1:4 to 1:6 for cabin air. The compressed cabin air from the second stage compressor 44 is then passed via a post-cooler 46 to the air separation module 48. The NEA fraction passes via a flow control valve 50 to the fuel tank 52. Referring now to Figure 5, there is shown a more detailed arrangement of the arrangement of Figure 4, in which similar components will be given similar reference numerals. The cabin waste air passes via a screening module 54 and a supply isolation valve 56 to a positive displacement compressor 40 which as previously may comprise a single or multi stage positive displacement compressor. The compressor is shown as being driven by a motor 58 but it may equally be driven at least partially or wholly by shaft power supplied e.g. from an expansion turbine (not shown). From the positive displacement compressor 40 the compressed cabin air passes via a supply check valve 60 into a heat exchanger 46 to pass along the cooling pass thereof. A temperature sensor 62 monitors the temperature of the air at the outlet of the heat exchanger 46 before it passes into a particulate filter 64, an ozone converter 66 and thence the air separation module 48. At the outlet of the air separation module 48 is a flow control valve 68 which controls flow of the NEA fraction into the fuel tank 52. The oxygen content, pressure and flow rate are detected by respective sensors 70, 72, 74.

In some situations such as where the aircraft is on the ground or low speed flight the ram air pressure may be insufficient to drive flow through the heat exchanger and in such conditions an ejector may be used. Thus a portion of the air from the compressor 40 may be tapped from the path between the supply check valve 60 and the heat exchanger 46. The tapped flow passes to an ejector 76 which operates to draw a cooling stream of ram air through the heat exchanger 46 via a control valve 78 and then exhausts the flow overboard via a ram ejector control valve 80. Alternatively a fan may be provided to draw the ram air through the heat exchanger 46.

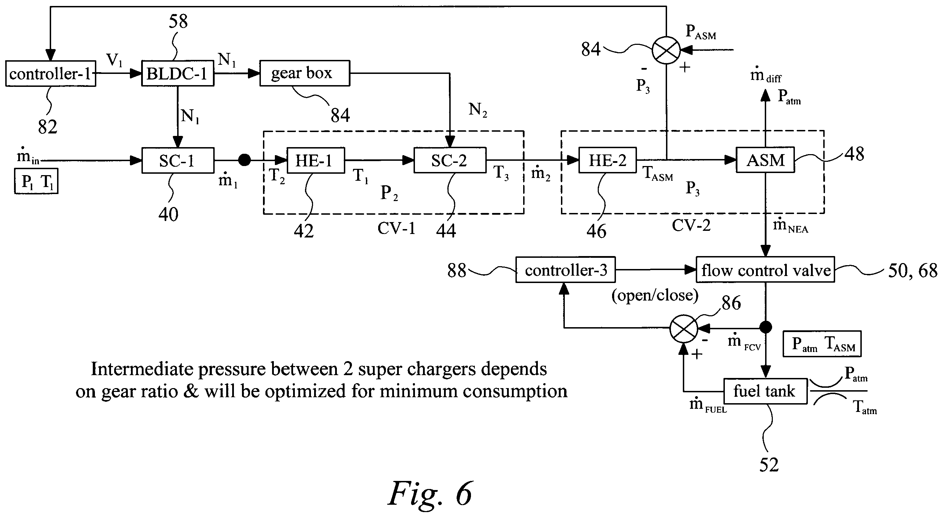

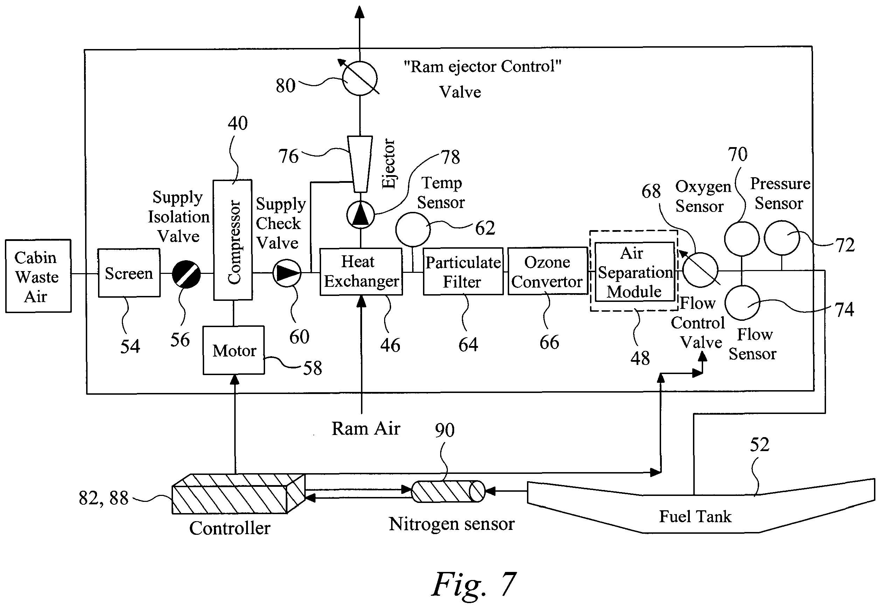

Referring now to the embodiment illustrated in Figures 6 and 7, a control system will be described for operating the on board inert gas generation system to provide the required flow of NEA from the ASM. Components similar to those of previous embodiments will be given similar references and will not be described in detail again.

The desired NEA flow depends on the oxygen content in the fuel tank, the ullage volume and the flight condition. During cruise the NEA flow is low as it only has to make up the volume created by fuel burn. In this phase the NEA purity is high in Nitrogen and the Oxygen content in the tank steadily reduces with time to a level much lower than the maximum allowable level. During descent the NEA flow is required to recompress the fuel tank ullage to increasing atmospheric levels to prevent air at 21% Oxygen entering. During this phase the NE purity may be higher than the maximum allowable but it mixes with the low tank levels to provide a net level within allowable limit. Having determined the required NEA flow, a controller controls a flow control valve to adjust the NEA flow rate accordingly. As the NEA flow rate is varied, this will affect the pressure in the NEA flow path from the ASM. This is compensated for by adjusting the speed of the compressor to restore the desired pressure in the flow path. The pressure in the ASM depends on the required mass flow rate and required oxygen concentration and thus the desired pressure in the ASM line will depend on the flight phase. As the NEA flow is increased at the start of descent the ASM inlet pressure will drop due insufficient supply air flow. The controller will sense this pressure drop and signal the compressor motor to increase speed and therefore delivery air flow to return the ASM inlet pressure to the controlled level to match the increased flow demand.

Referring now specifically to Figure 6, in this arrangement, the required pressure in the line from the ASM 48 is input as a demand signal at comparator 84 where it is compared to the pressure in the line to the ASM 48. The result of the comparison is supplied to a controller 82 that drives the motor 58 which here is a brushless DC motor. The motor drives the first stage supercharger 40 and, via a gearbox 85, a second stage supercharger 44. The NEA flow from the ASM passes via a flow control valve into the fuel tank 52. The mass flow of the NEA delivered to the fuel tank is compared with a required mass flow rate at a comparator 86 with the result of the comparison passing to a controller 88 that controls the flow control valve 50.

Referring now to Figure 7, this illustrates a system similar to that described in relation to Figure 5 except that a nitrogen sensor 90 monitors the composition of the ullage of the fuel tank and supplies a signal representative thereof to the controller 82,88. The nitrogen sensor may be located in or outside the fuel tank. The sensor could be replaced by an oxygen sensor or other purity sensor that monitors the gas composition in the ullage or upstream in the flow path from the ASM 48 to the fuel tank 52. From the measurement from the sensor the controller adjusts the speed of the motor 58 and the setting of the flow control valve 68 to provide the required pressure and flow through the ASM to adjust or maintain the composition as required in the fuel tank. Thus the controller may shut down the motor 58 or place it in idle mode when the nitrogen content of the ullage is within permissible limits, thereby saving energy, and wear and tear on the system, and improving overall efficiency. This is especially suitable for aircraft in which much of the auxiliary equipment is driven by electric power rather than by means of mechanical off takes or bleed air from the aircraft power plant.

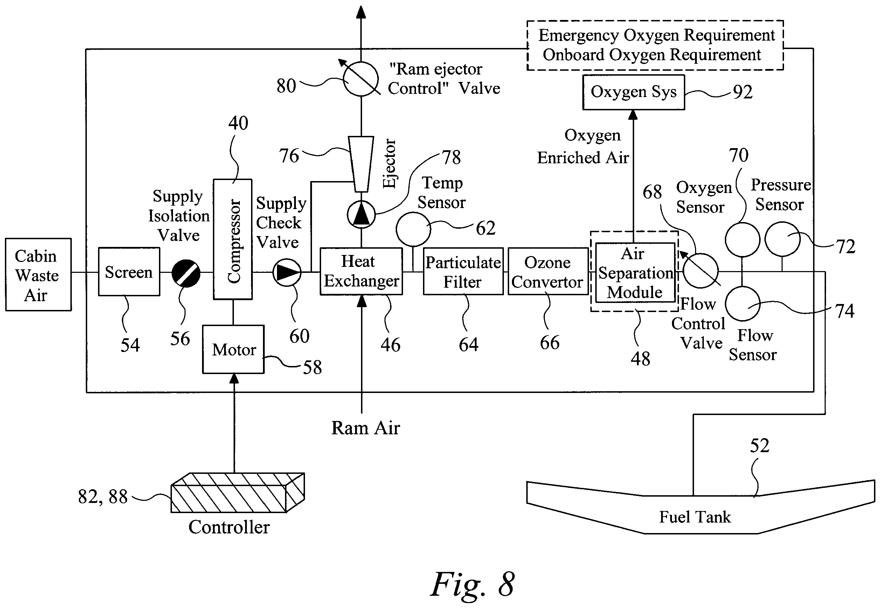

Figure 8 illustrates an embodiment similar to that of Figures 1 to 5 except that the OEA fraction from the ASM is delivered for use in other equipment or systems on board the aircraft that can utilise oxygen or OEA, such as emergency oxygen for passengers in the event of loss of cabin pressure or for an emergency landing. The OEA can also be used in non-emergency situations such as return to the cabin for addition to the cabin air supply.

## Claims

1. An on board inert gas generation system for use in an aircraft having a source of low pressure air, said gas generation system including a rotary positive displacement compressor (20,40) having an inlet for receiving a portion of said low pressure air, an outlet in flow communication with an air separation module (24,48) which in use delivers a Nitrogen Enriched Air fraction and an Oxygen Enriched Air fraction, the Nitrogen Enriched Air fraction being supplied to a space to be inerted (52), a motor (16,30,58) for driving said rotary positive displacement compressor (20,40), a sensor (70,72,74) for monitoring the composition of at least one of the fractions delivered by said air separation module (24,48) and/or the composition in said space to be inerted (52), and a controller (28,82,88) responsive to said sensor (70,90) which in use controls the motor speed in accordance with said monitored composition.

2. An on board inert gas generation system according to Claim 1, wherein said sensor (90) monitors the composition of the Nitrogen Enriched Air.

3. An on board inert gas generation system according to Claim 2, wherein said sensor (70,90) monitors at least one of the oxygen content and the nitrogen content of the Nitrogen Enriched Air.

4. An on board inert gas generation system according to any of the preceding claims which includes a flow control valve (50,68) in the flow path downstream of the air separation module (24,48), and wherein the controller (88) is operable to control the flow control valve (50,68) to vary the flow through said flow path in accordance with Nitrogen Enriched Air requirements.

5. An aircraft incorporating an on board inert gas generating system as claimed in any preceding claim.

6. A method for operating an on board inert gas generation system in an aircraft having a source of low pressure air (e.g. ram air or low pressure engine bleed air), which comprises the steps of:
supplying a portion of said low pressure air to a rotary positive displacement compressor (20,40),
supplying compressed air from said rotary positive displacement compressor (20,40) to an air separation module (24,48) which delivers a Nitrogen Enriched Air fraction and an Oxygen Enriched Air fraction, the Nitrogen Enriched Air fraction being supplied to a space to be inerted (52),
monitoring the composition of at least one of the fractions delivered by said air separation module (24,48) and/or the composition in said space to be inerted (52), and
controlling the motor speed in accordance with said monitored composition.

7. A method for operating an on board inert gas generation system as claimed in claim 6, wherein monitoring the composition comprises monitoring either the oxygen content or the nitrogen content, or both.

## Patentansprüche

1. Bord-Inertgaserzeugungssystem zur Verwendung in einem Flugzeug mit einer Niederdruckluftquelle, wobei das Gaserzeugungssystem einen Drehkolbenverdichter (20, 40) mit einem Einlass zum Aufnehmen eines Teils der Niederdruckluft, einem Auslass, welcher in Strömungsverbindung mit einem Lufttrennungsmodul (24, 48) steht, welches im Betrieb einen mit Stickstoff angereicherten Luftanteil und einen mit Sauerstoff angereicherten Luftanteil liefert, wobei der mit Stickstoff angereicherte Luftanteil einem zu inertisierenden Raum (52) zugeführt wird, einen Motor (16, 30, 58) zum Antreiben des Drehkolbenverdichters (20, 40), einen Sensor (70, 72, 74) zum Überwachen der Zusammensetzung mindestens eines der vom Lufttrennungsmodul (24, 48) gelieferten Anteile und/oder der Zusammensetzung im zu inertisierenden Raum (52), sowie eine auf den Sensor (70, 90) ansprechende Steuereinheit (28, 82, 88) aufweist, welche im Betrieb die Motordrehzahl gemäß der überwachten Zusammensetzung steuert.

2. Bord-Inertgaserzeugungssysstem nach Anspruch 1, wobei der Sensor (90) die Zusammensetzung der mit Stickstoff angereicherten Luft überwacht.

3. Bord-Inertgaserzeugungssystem nach Anspruch 2, wobei der Sensor (70, 90) mindestens einen des Sauerstoffgehalts und des Stickstoffgehalts der mit Stickstoff angereicherten Luft überwacht.

4. Bord-Inertgaserzeugungssystem nach einem der vorhergehenden Ansprüche, welches im Strömungsweg stromabwärts des Lufttrennungsmoduls (24, 48) ein Stromdosierventil (50, 68) aufweist und wobei die Steuereinheit (88) in der Lage ist, das Stromdosierventil (50, 68) zu steuern, um den Durchfluss durch den Strömungsweg gemäß den Anforderungen bezüglich der mit Stickstoff angereicherten Luft zu variieren.

5. Flugzeug, welches ein Bord-Inertgaserzeugungssystem nach einem der vorhergehenden Ansprüche besitzt.

6. Verfahren zum Betreiben eines Bord-Inertgaserzeugungssystems in einem Flugzeug mit einer Niederdruckluftquelle (z. B. Stauluft oder Niederdruck-Motorzapfluft), umfassend die Schritte:
Zuführen eines Teils der Niederdruckluft in einen Drehkolbenverdichter (20, 40),
Zuführen von Druckluft aus dem Drehkolbenverdichter (20, 40) in ein Lufttrennungsmodul (24, 48), welches einen mit Stickstoff angereicherten Luftanteil und einen mit Sauerstoff angereicherten Luftanteil liefert, wobei der mit Stickstoff angereicherte Luftanteil einem zu inertisierenden Raum (52) zugeführt wird,
Überwachen der Zusammensetzung wenigstens eines der von dem Lufttrennungsmodul (24, 48) gelieferten Anteile und/oder der Zusammensetzung im zu inertisierenden Raum (52) und
Steuern der Motordrehzahl gemäß der überwachten Zusammensetzung.

7. Verfahren zum Betreiben eines Bord-Inertgaserzeugungssystems nach Anspruch 6, wobei das Überwachen der Zusammensetzung ein Überwachen entweder des Sauerstoffgehalts oder des Stickstoffgehalts oder beider umfasst.

## Revendications

1. Système embarqué de production de gaz inerte à utiliser dans un aéronef ayant une source d'air à basse pression, ledit système de production de gaz incluant un compresseur rotatif volumétrique (20, 40) ayant une entrée pour recevoir une partie dudit air à basse pression, une sortie en communication de flux avec un module de séparation d'air (24, 48) qui en fonctionnement délivre une fraction d'Air Enrichie en Azote et une fraction d'Air Enrichie en Oxygène, la fraction d'Air Enrichie en Azote étant fournie à un espace à rendre inerte (52), un moteur (16, 30, 58) pour entraîner ledit compresseur rotatif volumétrique (20, 40), un capteur (70, 72, 74) pour contrôler la composition d'au moins une des fractions délivrées par ledit module de séparation d'air (24, 48) et/ou la composition dans ledit espace à rendre inerte (52), et une unité de commande (28, 82, 88) sensible audit capteur (70, 90) qui en fonctionnement commande la vitesse de moteur selon ladite composition contrôlée.

2. Système embarqué de production de gaz inerte selon la revendication 1, dans lequel ledit capteur (90) contrôle la composition de l'Air Enrichi en Azote.

3. Système embarqué de production de gaz inerte selon la revendication 2, dans lequel ledit capteur (70, 90) contrôle au moins une de la teneur en oxygène et de la teneur en azote de l'Air Enrichi en Azote.

4. Système embarqué de production de gaz inerte selon l'une quelconque des revendications précédentes, qui inclut une vanne de commande de flux (50, 68) dans le chemin de flux en aval du module de séparation d'air (24, 48), et dans lequel l'unité de commande (88) est opérationnelle pour commander la vanne de commande de flux (50, 68) pour varier le flux à travers ledit chemin de flux selon des exigences de l'Air Enrichi en Azote.

5. Aéronef incorporant un système embarqué de production de gaz inerte selon l'une quelconque des revendications précédentes.

6. Procédé pour mettre en oeuvre un système embarqué de production de gaz inerte dans un aéronef ayant une source d'air à basse pression (par exemple de l'air dynamique ou de l'air de prélèvement de moteur à basse pression), qui comprend les étapes de :
fourniture d'une portion dudit air à basse pression à un compresseur rotatif volumétrique (20, 40),
fourniture d'air comprimé provenant dudit compresseur rotatif volumétrique (20, 40) à un module de séparation d'air (24, 48) qui délivre une fraction d'Air Enrichie en Azote et une fraction d'Air Enrichie en Oxygène, la fraction d'Air Enrichie en Azote étant fournie à un espace à rendre inerte (52),
contrôle de la composition d'au moins une des fractions délivrées par ledit module de séparation d'air (24, 48) et/ou de la composition dans ledit espace à rendre inerte (52), et
commande de la vitesse de moteur selon ladite composition contrôlée.

7. Procédé pour mettre en oeuvre un système embarqué de production de gaz inerte selon la revendication 6, dans lequel le contrôle de la composition comprend le contrôle soit de la teneur en oxygène soit de la teneur en azote, ou les deux.
